# EUROPEAN PATENT APPLICATION

(11) **EP 1 801 628 A1**
(43) Date of publication of application: **27.06.2007**
(21) Application number: 05270103.4
(22) Date of filing: 23.12.2005
(51) Int. Cl.: G02B 7/10

(54) **Focussing System**

(71) Applicant: STMicroelectronics (Research & Development) Limited, Marlow, Buckinghamshire SL7 1YL (GB)
(72) Inventor: Campbell, Colin, Edinburgh, Lothian EH12 9JE (GB); Saugier, Eric, 38190 Lancey (FR); Scicluna, Leo, QRM06, Qormi (MT); Daamen, Edwin, 6121 NP, Born (NL)
(74) Representative: McBride, Peter Hill

(57) **Abstract**

The system has a lens carrier (12) movable with respect to a frame (14) by a piezoelectric motor (16). The motion is controlled by a master post () engaging with jewel bearings in the lens carrier (12), and by a slave post (not seen in Fig. 1). An end stop arrangement settable during manufacture is also described.

## Description

This invention relates to a drive arrangement for positioning a lens to adjust the focus thereof. The invention is particularly, but not exclusively, useful in an autofocus system used in small and light image capture devices such as cameras incorporated in mobile telephones and other mobile devices.

In recent years there has been a great development of cameras incorporated in mobile devices. Such cameras must be physically small and of light weight. In addition, battery capacity is a significant problem in mobile devices such as telephones, PDAs and laptops, and it is extremely desirable to minimise current draw in all components of such devices.

Conventionally, the focus of a lens assembly is set by mounting the lens in a threaded barrel. For autofocus assemblies, the barrel is threaded into a carriage which is driven by some form of motor. Known forms of autofocus assemblies are relatively large and heavy, and consume relatively large amounts of power. It is also difficult to provide an accurate end stop to the lens travel corresponding to the optimum infinity setting.

The present invention provides a focussing system for a lens, comprising a frame, a lens carrier movable relative to the frame along an optical axis, and a motor for driving the lens carrier bidirectionally along said axis; characterised in that the lens carrier is slidably mounted on a post fixed to the frame.

The lens carrier may suitably include a passage through which said post passes, and bearing means within said passage engaging with the post.

Said bearing means preferably comprises an axially spaced pair of jewel (e.g. ruby) bearings.

Preferably, said post is of circular cross-section, and the lens carrier also engages with a second post secured to the frame.

The motor is preferably a linear motor, most preferably a piezoelectric motor.

The system may include a position sensor arranged to detect the position of the lens carrier relative to the frame.

Preferably, the system includes a stop member for fixing an end point of motion of the lens carrier, the stop member being secured to the frame and having a stop face spaced from the frame and engageable by a surface of the lens carrier.

The stop member may suitably comprise a rod having a flange forming said stop face, the rod being engaged in a friction fit in an aperture in the frame and secured therein by adhesive.

The invention also provides a lens assembly comprising a system as defined above and a lens mounted in the lens carrier.

A further aspect of the invention resides in a camera including the foregoing lens assembly.

Also, the invention provides a mobile electronic device including the foregoing lens assembly, such as a mobile telephone or a PDA.

An embodiment of the invention will now be described, by way of example only, with reference to the drawings, in which:
Figure 1 is an exploded perspective view of one form of autofocus assembly in accordance with the invention;
Figure 2 is a perspective view of the assembly minus an outer EMI shield, from a different direction;
Figure 3 is a view similar to Figure 2, but with a piezoelectric motor removed;
Figure 4 is a view from a slightly different angle, with further parts removed.

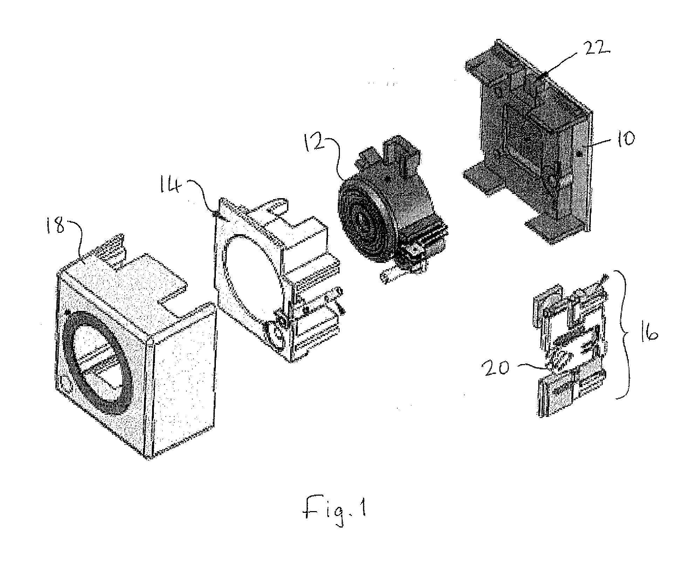

The assembly, as best seen in overview in Figure 1, comprises a base 10, a lens holder 12, a frame 14, a piezoelectric motor 16, and a shield 18.

The shield 18 is an electromagnetic interference (EMI) shield and also serves as a protective cover to the operating parts. It has no other functional significance, and will not be further described.

The lens holder 12 has a lens (not seen) secured therein, and must be moved along the lens axis relative to the frame 14 and base 10 to provide focusing of an image onto an image capture device (not shown) such as a CMOS sensor secured in the base 10. This movement is effected by the piezoelectric motor 16 as will be described further below.

Piezoelectric motors, both linear and rotary, are known per se, and the motor 16 will not be described in detail herein. Briefly stated, a high frequency electrical field operating on a pair of piezoelectric sheets produces linear movement, selectively forward or back, of a chuck 20. As is known, a piezoelectric motor can produce rapid and very accurate movement, and can readily be controlled in a feedback loop for which purpose a position detector 22 is mounted on the base 10.

The motor 16 in the present embodiment is preferably one incorporating the principles of US 6,768,245 (Mock and Witteveen) and available from Miniswys SA of Biel (CH).

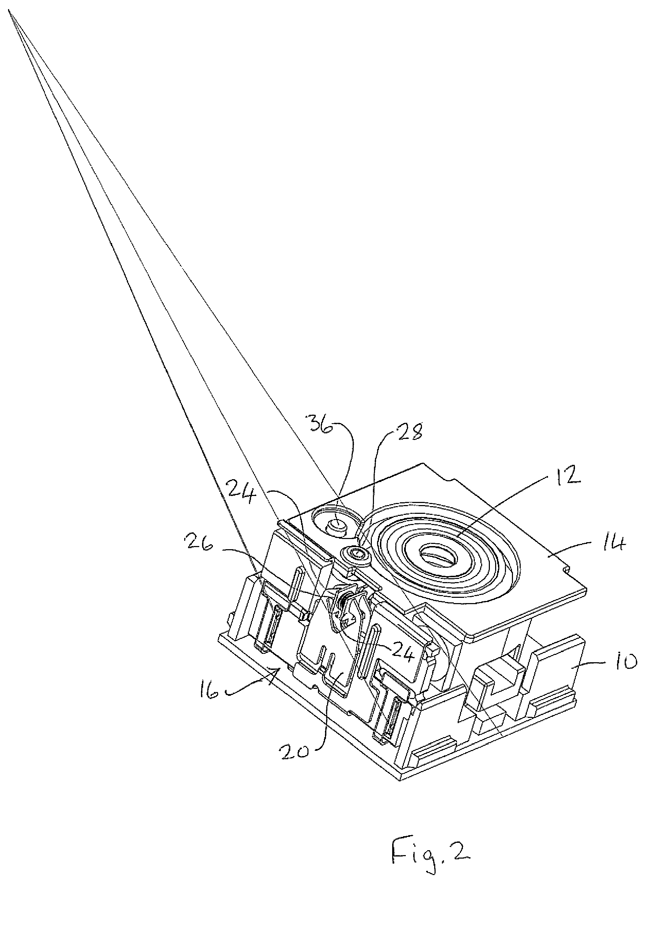

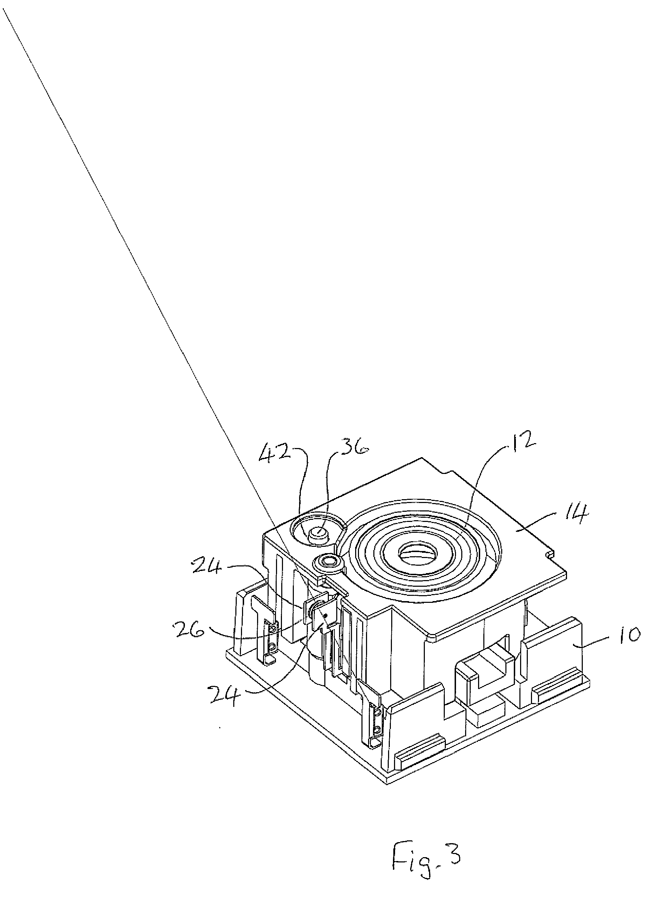

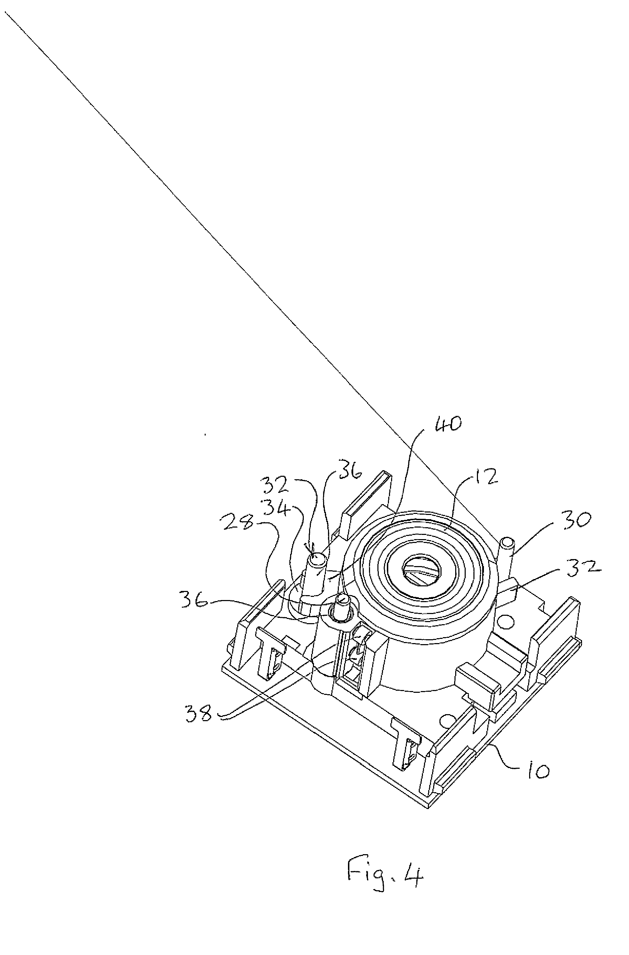

As best seen in Figures 2 and 3, the chuck 20 engages with left and right chuck guides 24 which are biased apart by a spring 26. The lens holder 12 is guided for accurate axial movement on a master post 28 and a slave post 30 (Figure 4). The master post 28 passes through a cylindrical bore 36 of the lens holder 12, and is engaged by a pair of jewel (e.g. ruby) bearings mounted in holders 38. The slave post engages with a slotted extension 32 of the lens holder 12.

Thus, alignment in sliding motion is provided essentially by the master post 28 and jewel bearings, the slave post 30 serving largely to prevent rotation of the lens holder 12. The master post 28 can be made to high accuracy from a hard material, suitably steel, and secured to the base 10, for example by being glued into a moulded bore.

It is desirable to provide an end stop defining the infinity focus position in such a way that the position of the end stop can be set during manufacture. In the present embodiment, an end stop 32 is provided in the form of a flange 34 on a post 36, cooperating with a fork member 40 integral with the lens holder 12. The post 36 is a friction fit in an aperture 42 in a reduced thickness portion of the frame 14. The stop is set during manufacture by pushing on the free end of the post 36 and driving the lens assembly down with the motor 16 until the desired focus limit is reached, which can be determined by analysing the image signal produced for a predetermined target at a predetermined distance. When the desired focus limit position is reached, the focus stop 32 is set by applying an adhesive between the post 36 and the frame 14.

The use of a piezoelectric motor is preferred in the present invention. This has a number of advantages including small size and weight, high accuracy, and low current requirements. It also has the advantage of self-locking in position when no current is applied. However, the invention may also be used with other forms of linear actuator.

Modifications may be made to the guide arrangement described. For example, instead of using master and slave posts, a master post of non-circular section could be used.

The lens holder 12 has any suitable form of lens secured therein. In this context, "lens" is used to mean a single lens element, or a compound lens formed by two or more elements. The details of the lens design form no part of the present invention and need not be described here.

The assembly of the invention is most suitably used as part of an imaging system using a solid-state image sensor such as a CMOS single-chip image sensor. The imaging system is particularly suitable for use in portable devices such as mobile phones and PDAs.

Preferred forms of the invention substantially reduce the energy requirements as compared with the prior art by the combination of a post or pole suspension and a low energy motor such as a piezoelectric motor. The post suspension has a low friction characteristic, especially when ruby or similar bearings are used. The post is positioned close to the motor to reduce the moment on the post and thus the frictional force generated by the moment. As the forces reacting against the motor are low, the motor is required to generate only enough force to move the lens assembly against gravity and to overcome the inertia of the lens assembly.

To achieve these results, the tolerances of the assembly should be tight. The embodiment described simplifies this by having the critical parts held together by a single part. The frame aligns the master post to the motor, the motor to the lens assembly, and the lens assembly to the master pole.

The embodiment described minimises the force, and therefore the energy, required to drive the lens assembly to its desired position. The assembly can travel from one end to the other of its travel range in 30ms. The design is simple, with a low part count and simplified assembly

## Claims

1. A focussing system for a lens, comprising a frame, a lens carrier movable relative to the frame along an optical axis, and a motor for driving the lens carrier bidirectionally along said axis; **characterised in that** the lens carrier is slidably mounted on a post fixed to the frame.

2. A system according to claim 1, in which the lens carrier includes a passage through which said post passes, and bearing means within said passage engaging with the post.

3. A system according to claim 1, in which said bearing means comprises an axially spaced pair of jewel bearings.

4. A system according to any preceding claim, in which said post is of circular cross-section, and in which the lens carrier also engages with a second post secured to the frame.

5. A system according to any preceding claim, in which the motor is a linear motor.

6. A system according to claim 5, in which the motor is a piezoelectric motor.

7. A system according to any preceding claim, including a position sensor arranged to detect the position of the lens carrier relative to the frame.

8. A system according to any preceding claim, including a stop member for fixing an end point of motion of the lens carrier, the stop member being secured to the frame and having a stop face spaced from the frame and engageable by a surface of the lens carrier.

9. A system according to claim 8, in which the stop member comprises a rod having a flange forming said stop face, the rod being engaged in a friction fit in an aperture in the frame and secured therein by adhesive.

10. A lens assembly comprising a system according to any preceding claim and a lens mounted in the lens carrier.

11. A camera including the lens assembly of claim 10.

12. A mobile electronic device including the lens assembly of claim 10.

13. The device of claim 12, being a mobile telephone.

14. The device of claim 12, being a PDA.
